# FASCICULE DE BREVET EUROPEEN

(11) **EP 1 377 035 B1**
(45) Date de publication et mention de la délivrance du brevet: **24.02.2010**
(21) Numéro de dépôt: 03013604.8
(22) Date de dépôt: 16.06.2003
(51) Int. Cl.: H04N 5/00, H04N 7/16, H04N 7/167

(54) **Méthode de mise à jour de clés de sécurité dans un décodeur de télévision**
Sicherheitsschlüsselaktualisierungsmethode für Fernsehdekoder
Updating method for security keys in a television decoder

(30) Priorité: 28.06.2002 CH 11262002
(43) Date de publication de la demande: 02.01.2004
(73) Titulaire: Nagravision S.A., 1033 Cheseaux-sur-Lausanne (CH)
(72) Inventeur: Brique, Olivier, 1052 Le Mont-sur-Lausanne (CH); Gogniat, Christophe, 1022 Chavannes-près-Renens (CH); Kudelski, Henri, 1071 Chexbres (CH)
(74) Mandataire: Wenger, Joel-Théophile

(56) Documents cités:
- WO-A-98/56180
- WO-A-99/09743
- WO-A1-97/38530
- WO-A1-99/57901

## Description

La présente invention concerne le domaine des récepteurs de télévision à péage, en particulier de la sécurité des liaisons entre un récepteur et son module de sécurité.

Dans un système de télévision numérique à péage, le flux numérique transmis vers ces récepteurs est encrypté afin de pouvoir en contrôler l'utilisation et de définir des conditions pour une telle utilisation. Cette encryption est réalisée grâce à des mots de contrôle (Control Words) qui sont changés à intervalle régulier (typiquement entre 5 et 30 secondes) afin de dissuader toute attaque visant à retrouver un tel mot de contrôle.

Pour que le récepteur puisse décrypter le flux encrypté par ces mots de contrôle, ces derniers lui sont envoyés indépendamment du flux dans des messages de contrôle (ECM) encryptés par une clé propre au système de transmission entre le centre de gestion (CAS) et le module de sécurité de l'unité d'utilisateur. En effet, les opérations de sécurité sont effectuées dans une unité de sécurité (SC) qui est généralement sous la forme d'une carte à puce, réputée inviolable. Cette unité peut être soit de type amovible ou directement intégrée au récepteur

Les mots de contrôles sont ensuite retournés au décodeur afin de pouvoir décrypter le flux encrypté.

Pour empêcher que ces mots de contrôle soient interceptés lors de leurs transmissions vers le décodeur, cette liaison a été sécurisée soit par des clés de session tel que décrit dans le document WO97/38530 soit par une clé d'appariement tel que décrit dans le document WO99/57901.

Dans le deuxième document cité, une clé secrète est contenue dans le récepteur qui est appariée au module de sécurité qui lui est connecté lors d'une phase d'initialisation. Cette clé peut être de type symétrique ou asymétrique. Les deux dispositifs sont donc inséparables du point de vue opérationnel.

Néanmoins, il peut s'avérer utile de faire évoluer cette sécurité, par exemple pour remplacer une clé d'une certaine technologie (longueur de clé par exemple) par une autre technologie.

Cette opération revêt par elle-même un risque important de fraude car il s'agit d'installer à distance des nouveaux moyens de sécurité. On sait que des récepteurs sont aux mains de personnes à l'affût de toutes informations leur permettant de casser la sécurité mise en place.

C'est pourquoi, le présente invention se propose de faire évoluer une première sécurité basée sur une première clé vers une seconde sécurité basée sur une seconde clé, cette opération étant effectuée dans un milieu non protégé par une transmission dite ouverte, garantissant le même niveau de sécurité que si cette opération était effectuée localement dans un lieu propre au gestionnaire du système.

Ce but est atteint par une méthode telle que définie dans la revendication 1.

De cette manière, un message intercepté et décrypté par la clé publique commune transmise précédemment ne permet pas de retrouver la nouvelle clé publique car seule la première clé personnelle du décodeur est à même de décoder le message.

Ainsi, cette méthode garantit que cette nouvelle clé sera installée là où la première clé est stockée. Si un décodeur ne possède pas cette clé, aucune nouvelle clé ne sera installée.

Selon un mode de fonctionnement, cette première clé est la clé qui sert à l'appariement avec l'unité de sécurité. Comme indiqué plus haut, elle peut être de type symétrique ou de type asymétrique. Dans le deuxième cas, on placera la clé privée dans l'unité de sécurité et la clé publique dans le décodeur.

De la même manière, lors de la préparation du message chiffré, la nouvelle clé asymétrique sera chiffrée par la clé privée correspondant à la première clé publique dudit décodeur.

Une vérification supplémentaire est appliquée par le programme de mise à jour, vérification basée sur le numéro unique du décodeur. Le message contient également le numéro unique UA du décodeur. Ce numéro est décrypté par la clé publique commune. Ainsi, avant d'utiliser la première clé du décodeur, le programme vérifie si le numéro unique est bien conforme à ce qui était prévu.

Le décodeur se trouve donc avec deux clés personnelles, soit la première clé et la nouvelle clé publique. Ces deux clés vont être utilisées dans le mécanisme d'appariement avec l'unité de sécurité.

Afin de garantir le bon fonctionnement de l'ensemble, l'unité de sécurité devra également recevoir une nouvelle clé privée qui corresponde à la nouvelle clé publique reçue par le décodeur. Pour cela, il dispose de moyens de sécurité pour la transmission sécurisée de cette clé qui est ensuite chargée dans la mémoire non volatile de cette unité. On peut ajouter un niveau de sécurité supplémentaire à l'encryption par une clé de système, en encryptant cette clé privée par la première clé. Ainsi, chaque message devient unique et relié à la condition de connaître la première clé.

Cette structure permet de faire évoluer une sécurité utilisant une clé de sécurité, vers une sécurité utilisant deux clés (ou plus) sans rupture dans le mécanisme de mise à jour.

Lors de ce processus, il est recommandé de vérifier si la clé reçue est bien correcte et c'est pourquoi, il est ajouté à la nouvelle clé asymétrique, un identifiant constant connu du programme de mise à jour. Ainsi, ce programme va vérifier que la clé est bien valide avant de l'introduire dans sa mémoire.

Dans la pratique, c'est l'unité de sécurité du décodeur qui va recevoir le message encrypté et le transmettre au décodeur. Lorsque cette unité est appariée avec le décodeur, le message ainsi transmis est encrypté par la première clé qui est la clé d'appariement.

## Revendications

1. Méthode de mise à jour de la sécurité appliquée à la liaison entre un décodeur et son unité de sécurité comprenant une première clé appariée, ledit décodeur comprenant un numéro unique et étant relié à un centre de gestion, cette méthode comprenant les étapes suivantes:
• transmission du centre de gestion vers les décodeurs concernés, d'une clé publique commune et d'un programme de mise à jour,
• préparation au centre de gestion et pour chaque décodeur, d'un message chiffré, ce message contenant le numéro unique du décodeur ainsi qu'une nouvelle clé asymétrique publique chiffrée par la première clé dudit décodeur et par la clé privée commune,
• exécution dans le décodeur du programme de mise à jour et vérification du numéro unique du décodeur avec celui reçu dans le message et extraction de la nouvelle clé asymétrique publique du message grâce à la clé publique commune et sa première clé,
• stockage de cette nouvelle clé asymétrique publique dans le décodeur,
• transmission du centre de gestion vers l'unité de sécurité de la nouvelle clé asymétrique privée par un message sécurisé,
• stockage de cette nouvelle clé asymétrique privée dans l'unité de sécurité.

2. Méthode selon la revendication 1, **caractérisée en ce que** la première clé est de type symétrique.

3. Méthode selon la revendication 1, **caractérisée en ce que** la première clé est de type asymétrique, la nouvelle clé asymétrique publique est chiffrée par la première clé privée correspondant à la première clé publique dudit décodeur.

## Claims

1. Security updating method applied to the connection between a decoder and its security unit comprising a first matching key, said decoder comprising a unique number and being connected to a managing centre, this method comprising the following steps:
• transmission from the managing centre toward the targeted decoders, a shared public key and an updating programme,
• preparation at the managing centre and for each decoder, of a encrypted message, this message containing the unique number of the decoder and a new asymmetric public key encrypted by the first key of said decoder and by the shared secret key,
• carrying out in the decoder of the updating programme and verification of the unique number of the decoder with the one received in the message and extraction of the new asymmetric public message key thanks to the shared public key and its first key,
• storage of this new asymmetric public key in the decoder.
• Transmission from the managing centre toward the security unit of the new asymmetric secret key through a secure message,
• Storage of this new asymmetric secret key into the security unit.

2. Method according to claim 1, **characterized by** the fact that the first key is of a symmetric type.

3. Method according to claim 1, **characterized by** the fact that the first key is of an asymmetric type, the new asymmetric public key is encrypted by the first secret key corresponding to the first public key of said decoder.

## Patentansprüche

1. Verfahren zum Aktualisieren der für die Verbindung zwischen einem Decoder und seiner Sicherheitseinheit eingesetzten Absicherung mit einem ersten gepaarten Schlüssel, wobei der Decoder über eine eineindeutige Nummer verfügt und mit einem Verwaltungszentrum verbunden ist, wobei das Verfahren die folgenden Schritte aufweist:
• Übermitteln eines gemeinsamen öffentlichen Schlüssels und eines Aktualisierungsprogramms von dem Verwaltungszentrum zu den betroffenen Decodern,
• Erzeugen einer verschlüsselten Nachricht für jeden Decoder an dem Verwaltungszentrum, wobei diese Nachricht die eineindeutige Nummer des Decoders als auch einen neuen asymmetrischen öffentlichen Schlüssel enthält, der durch den ersten Schlüssel des Decoders und durch den gemeinsamen privaten Schlüssel verschlüsselt ist,
• Ausführen des Aktualisierungsprogramms in dem Decoder und Verifizieren der eineindeutigen Nummer des Decoders mit der durch die Nachricht erhaltenen sowie Extrahieren des neuen asymmetrischen öffentlichen Schlüssels der Nachricht mittels des gemeinsamen öffentlichen Schlüssels und seines ersten Schlüssels,
• Abspeichern dieses neuen asymmetrischen öffentlichen Schlüssels in dem Decoder,
• Übermitteln des neuen asymmetrischen privaten Schlüssels von dem Verwaltungszentrum über eine gesicherte Nachricht an die Sicherheitseinheit,
• Speichern des neuen asymmetrischen privaten Schlüssels in der Sicherheitseinheit.

2. Verfahren nach Anspruch 1, **dadurch gekennzeichnet, dass** der erste Schlüssel symmetrisch ist.

3. Verfahren nach Anspruch 1, **dadurch gekennzeichnet, dass** der erste Schlüssel asymmetrisch ist und dass der neue asymmetrische öffentliche Schlüssel durch den ersten privaten Schlüssel verschlüsselt ist, der dem ersten öffentlichen Schlüssel des Decoders entspricht.
